# EUROPÄISCHE PATENTSCHRIFT

(11) **EP 2 867 143 B1**
(45) Veröffentlichungstag und Bekanntmachung des Hinweises auf die Patenterteilung: **30.05.2018**
(21) Anmeldenummer: 13736523.5
(22) Anmeldetag: 01.07.2013
(51) Int. Cl.: B65D 85/804

(54) **PORTIONSKAPSEL MIT EINER KENNUNG AUF DER INNENSEITE EINER VERSCHLUSSMEMBRANE**
PORTION CAPSULE HAVING AN IDENTIFICATION ON THE INTERNAL SIDE OF A CLOSING MEMBRANE
CAPSULE PRÉSENTANT UNE IDENTIFICATION SUR LA FACE INTERIEURE D'UNE MEMBRANE DE FERMETURE

(30) Priorität: 29.06.2012 DE 102012105790; 19.06.2013 DE 102013211568
(43) Veröffentlichungstag der Anmeldung: 06.05.2015
(60) Teilanmeldung: 17182882.5
(73) Patentinhaber: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Loock, Jan Pieter
(86) Internationale Anmeldenummer: PCT/EP2013/063800
(87) Internationale Veröffentlichungsnummer: WO 2014/001563

(56) Entgegenhaltungen:
- EP-A1- 1 974 638
- EP-A1- 2 345 352
- WO-A1-2005/044067
- WO-A1-2012/010317
- DE-U1-202010 007 919

## Beschreibung

Die vorliegende Erfindung betrifft eine Portionskapsel zur Herstellung eines Getränks mit einem Basiselement, das einen Hohlraum aufweist, in dem ein Getränkerohmaterial vorgesehen ist und der von einer Membran verschlossen wird, die an dem Basiselement befestigt ist, wobei sie eine Kennung aufweist, die es ermöglicht, die jeweilige Portionskapsel zu individualisieren. Des Weiteren betrifft die vorliegende Erfindung die Verwendung der Portionskapsel zur Herstellung eines Getränks.

Derartige Portionskapseln sind hinlänglich bekannt und werden in einer Vielzahl von Ausführungsformen am Markt angeboten und werden dazu eingesetzt Kaffee, Espresso, Cappuccino, Tee, Milch- oder Kakao-Getränke aber auch sonstige Getränke oder Lebensmittel wie Suppen herzustellen. Derartige Portionskapseln sind z.B. aus WO 2012/010317, EP 2345352, EP 1974638, DE 202010007919 und WO 2005/044067 bekannt. Um in einem Automaten hergestellt werden zu können, müssen diese Kapseln alle dieselbe äußere Form haben, wobei sich das jeweilige Herstellungsverfahren unterscheidet. Beispielsweise kann sich die Wassermenge und/oder die Temperatur, die zur Herstellung des jeweiligen Getränks eingesetzt wird, unterscheiden. Des Weiteren kann das Wasser der Portionskapsel kontinuierlich oder intermittierend durch die Portionskapsel geleitet werden. Die Automaten, die zur Herstellung des jeweiligen Getränks oder Lebensmittels eingesetzt werden, müssen in regelmäßigen Abständen gereinigt werden, wozu Reinigungskapseln zur Verfügung stehen, deren äußere Maße zu den Maßen der Portionskapseln identisch sind und die ebenfalls von Wasser durchströmt wird, nachdem sie in den Automat eingeführt worden ist, das die Reinigungssubstanz aus den Kapseln löst und mit der Lösung die Brühkammer des Automaten und die stromabwärtigen Leitungen reinigt. Dabei ist es unbedingt zu vermeiden, dass ein Benutzer, beispielsweise ein Kind oder ein sehbehinderter Erwachsener die Reinigungskapsel zur Herstellung eines Getränkes einsetzt und dieses konsumiert.

Es war deshalb die Aufgabe der vorliegenden Erfindung, eine Portionskapsel zur Verfügung zu stellen, die die Nachteile des Standes der Technik nicht aufweist.

Gelöst wird die Aufgabe mit einer Portionskapsel zur Herstellung eines Getränks mit einem Basiselement gemäß Anspruch 1. Die vorliegende Erfindung betrifft eine Portionskapsel zur Herstellung eines Getränkes oder Lebensmittels, welches einen Hohlraum aufweist, in dem ein Getränkerohmaterial vorgesehen ist. Eine derartige Portionskapsel wird beispielsweise aus Kunststoff, einem Naturstoff und/oder einem biologisch abbaubaren Werkstoff hergestellt und weist ein Basiselement, insbesondere ein geformtes, vorzugsweise tiefgezogenes, oder ein durch Spitzen hergestelltes Basiselement, auf, das vorzugsweise kegelstumpfförmig oder zylindrisch geformt ist und einen Boden aufweist. In den Hohlraum der Portionskapsel wird das Getränkerohmaterial eingefüllt, das beispielsweise von einer Flüssigkeit, insbesondere Wasser, extrahiert und/oder aufgelöst wird. Das Basiselement wird nach dem Einfüllen des Getränkerohmaterials mit einer Membran verschlossen. Die Membran ist vorzugsweise dem Boden des Basiselementes gegenüberliegend vorgesehen. Die Membran kann aus demselben oder einem unterschiedlichen Werkstoff wie das Basiselement gefertigt sein und wird vorzugsweise durch Siegeln und/oder Kleben an dem Basiselement befestigt. Die Membran kann gas- und/oder flüssigkeitsdicht ausgebildet oder gas- und/oder flüssigkeitsdurchlässig ausgebildet sein. Des Weiteren können in dem Hohlraum ein oder mehrere Einbauelemente, wie beispielsweise ein Filter, ein Flüssigkeitsverteiler, ein Vlies, ein Filz, eine Absperrfolie und/oder dergleichen vorgesehen werden. Für den Fall, dass ein Filz und ein Vlies vorgesehen sind, sind diese vorzugsweise miteinander verbunden. Der Filz und/oder das Vlies können mehrlagig vorgesehen werden, wobei sich die Lagen in der Art des verwendeten Ausgangsmaterials und/oder dessen Verarbeitung unterscheiden können. Die Membran und/oder der Boden können mit mehreren Ausnehmungen (Löchern) versehen sein.

Erfindungsgemäß ist weiterhin vorgesehen, dass diese Portionskapsel eine Kennung aufweist, die es ermöglicht, die jeweilige Portionskapsel zu individualisieren. Individualisieren im Sinne der Erfindung bedeutet vorzugsweise, dass die jeweilige Portionskapsel einer Gruppe zugeordnet werden kann, die für die Herstellung eines Getränks oder Lebensmittels oder zur Reinigung des Automaten geeignet ist. Es ist nicht nötig, dass die Kennung offenbart, um welche Portionskapsel es sich speziell handelt, d.h. eine Seriennummer oder Chargennummer oder dergleichen enthält, sondern lediglich die Klassierung der jeweilige Portionskapsel zu einer Gruppe von Portionskapseln erlaubt, beispielsweise Getränk-/Lebensmittelportions- oder Reinigungskapsel. Vorzugsweise erlaubt die Kennung zusätzlich die Differenzierung zwischen den einzelnen Getränke und/oder Lebensmittelart, beispielsweise, dass es sich um eine Kapsel handelt, mit der Tee, Kaffee, ein Milchgetränk oder dergleichen oder eine Suppe hergestellt werden kann.

Vorzugsweise erfasst ein an einem Automaten, beispielsweise Kaffeeautomaten, vorgesehener Sensor/Detektionsmittel diese Kennung und vergleicht sie vorzugsweise mit einer abgespeicherten Kennung. Vorzugsweise ist der Automat nur dann in Betrieb zu nehmen, insbesondere seine, das Wasser zur Verfügung stellende Druckpumpe, wenn die ermittelte Kennung mit der Referenzkennung einer Getränk-/Lebensmittelportionskapsel übereinstimmt. Andernfalls ist der Kaffeeautomat nicht in Betrieb zu nehmen, weil zu befürchten ist, dass es sich um eine Reinigungskapsel handelt, in der sich beispielsweise ein Reinigungsmittel befindet. In diesem Fall kann der Automat beispielsweise nur dann in Betrieb genommen werden, wenn vorher eine bestimmte Tastenkombination auf dem Bedienfeld des Automaten gedrückt worden ist, mit der der Benutzer verifiziert, dass ihm bekannt ist, dass es sich um eine Reinigungskapsel handelt. Dadurch wird sicher vermieden, dass eine Reinigungskapsel versehentlich zur Getränkeherstellung verwendet wird.

Die Kennung kann alternativ oder zusätzlich dazu dienen, dass der Kaffeeautomat ein bestimmtes Programm fährt, d. h. beispielsweise das Wasser auf eine bestimmte Temperatur heizt, mit einem bestimmten Druck zur Verfügung stellt und/oder eine bestimmte Wassermenge durch die Portionskapsel fördert.

Alternativ oder zusätzlich dient die Kennung zum Sortieren der Materialien aus dem die Portionskapsel hergestellt ist bei einem späteren Entsorgungs- und/oder Recycling-Prozess.

Erfindungsgemäß ist die Kennung auf der Innenseite der Membran, d.h. in dem Hohlraum vorgesehen. Dadurch ist die Kennung vor Beschädigung und/oder Manipulation geschützt. Erfindungsgemäß ist die Kennung auf einem Film, d. h. einer Folie, insbesondere einer Kunststofffolie, die vorzugsweise eine lebensmittelrechtliche Zulassung aufweist, vorgesehen, die mit der Membran auf deren Innenseite verbunden wird, während die Membran geformt oder durch Spritzen/Spritzgießen hergestellt wird. Dadurch kann die Kennung auf dem Film aufgebracht werden, bevor diese mit der Membran verbunden wird. Diese kann dann mit der Portionskapsel verbunden werden, ohne dass die Kennung beschädigt oder ihr Informationsgehalt unleserlich wird.

Vorzugsweise befindet sich die Kennung auf der der Portionskapsel zugewandten Seite, so dass sie sich nach dem Vorsehen der Folie an der Membran zwischen der Membran und der Folie befindet. Dadurch ist die Kennung durch die Folie geschützt.

Die Kennung kann aber auch an der Membran vorgesehen werden, indem eine Folie, an der die Kennung vorgesehen ist, mit der Membran verbunden wird. Vorzugsweise befindet sich die Kennung dann zwischen zwei Folienschichten.

Vorzugsweise ist die Folie mehrlagig ausgeführt werden und die Kennung befindet sich besonders bevorzugt zwischen zwei Folienlagen.

Vorzugsweise wird die Kennung durch Drucken auf die Folie oder eine Schicht der Folie aufgetragen. Erfindungsgemäß handelt es sich bei der Kennung um Flächenbereiche mit einer bestimmten optischen Eigenschaft, beispielsweise Reflexionseigenschaft und/oder Fluoreszenzeigenschaft und/oder Phosphoreszenzeigenschaft, die von einem Sensor erkennbar ist. Dieser Flächenbereich ist auf dem Film mit der Kennung vorgesehen, der an der Membran vorgesehen ist. Vorzugsweise weist der Film mit der Kennung mindestens zwei Bereiche auf, die sich in ihren optischen Eigenschaften, beispielsweise den Reflexionseigenschaften und/oder Fluoreszenzeigenschaften und/oder Phosphoreszenzeigenschaften, unterscheiden.

Bei der Kennung kann es sich beispielsweise um ein optisch erkennbares Material, beispielsweise eine fluoreszierende und/oder phosphoreszierende Substanz, handeln. Weiterhin kann es sich um eine Kennung in Form einer Metallschicht oder Ferrometallschicht bzw. in Form von Metall- oder Ferrometallstreifen handeln.

Eine fluoreszierende Substanz im Sinne der Erfindung besteht aus mindestens einem Molekül, mit mindestens einem Elektronen, das angeregt durch elektromagnetische Strahlung vorzugsweise aus seinem Orbital herausgelöst und in ein vorzugsweise leeres, unbesetztes Orbital mit einem höheren Energiegehalt gehoben wird. Dieser angeregte Zustand ist in der Regel nicht stabil, so dass das Elektron wieder in sein ursprüngliches Orbital zurückfällt und seine Energie wird zumindest teilweise in Form von elektromagnetischer Strahlung frei. Diese freiwerdende elektromagnetische Strahlung ist vorzugsweise langwelliger als die anregende elektromagnetische Strahlung. Bei einer Kennung, die auf einer fluoreszierenden Substanz basiert, empfängt ein Sensor die freiwerdende Strahlung und eine angeschlossene Steuerung vergleicht das Profil und/oder die Intensität dieser Strahlung mit einem hinterlegten Profil. Sind diese zumindest teilweise identisch weiß die angeschlossene Steuerung, dass es sich um eine Portions- und nicht um eine Reinigungskapsel handelt und gibt den Automaten frei. Alternativ oder zusätzlich erkennt die Steuerung um was für eine Portionskapsel es sich handelt, beispielsweise Tee, Kaffee, Milch oder dergleichen und steuert den Automaten entsprechend. Vorzugsweise weist die freiwerdende Strahlung mindestens ein, besonders bevorzugt mehrere Maxima auf. Der Sensor bzw. die angeschlossene Steuerung untersuchen dann, ob mindestens eines dieser Maxima bei der empfangenen Strahlung vorhanden ist.

Eine phosphoreszierende Substanz im Sinne der Erfindung besteht aus mindestens einem Molekül, mit mindestens einem Elektronen, das angeregt durch elektromagnetische Strahlung vorzugsweise aus seinem Orbital herausgelöst und in ein vorzugsweise leeres, unbesetztes Orbital mit einem höheren Energiegehalt gehoben wird. Dieser angeregte Zustand ist in der Regel nicht stabil, so dass das Elektron wieder in sein ursprüngliches Orbital zurückfällt und seine Energie wird zumindest teilweise in Form von elektromagnetischer Strahlung frei. Diese freiwerdende elektromagnetische Strahlung ist vorzugsweise langwelliger als die anregende Strahlung. Bei einer phosphoreszierenden Substanz endet die Strahlungsemission jedoch nicht mit dem Ende der Bestrahlung sondern klingt über einen längeren Zeitraum ab als dies bei der Fluoreszenz der Fall ist. Bei einer Kennung, die auf einer phosphoreszierenden Substanz basiert, empfängt ein Sensor, der in oder an dem Automaten vorgesehen ist die freiwerdende Strahlung und eine angeschlossene Steuerung vergleicht dieses Abklingprofil mit einem hinterlegten Abklingprofil oder Profilabschnitt. Vorzugsweise wird die Intensität dieser Strahlung, insbesondere bei einer bestimmten Frequenz, mit einem hinterlegten Abklingprofil und/oder einem bestimmten Wert verglichen. Sind diese zumindest teilweise identisch weiß der angeschlossene Steuerung, dass es sich um eine Portions- und nicht um eine Reinigungskapsel handelt und gibt den Automaten frei. Alternativ oder zusätzlich erkennt die Steuerung um was für eine Portionskapsel es sich handelt, beispielsweise Tee, Kaffee, Milch oder dergleichen und steuert den Automaten entsprechend. Der Sensor bzw. die angeschlossene Steuerung untersucht nach welcher Zeitspanne die ursprüngliche Intensität der Strahlung um einen bestimmten Prozentsatz abgeklungen ist und vergleicht den gemessen Wert mit einem hinterlegten Wert. Alternativ oder zusätzlich wird untersucht wie hoch die Intensität der Strahlung, insbesondere bei einer bestimmten Frequenz, nach einer bestimmten Zeitspanne ist und dieser Wert wird mit einem hinterlegten Wert verglichen. Stimmt der hinterlegte mit dem gemessenen Wert überein, gibt die Steuerung den Automaten frei oder wählt ein bestimmtes Zubereitungsprogramm für das jeweilige Getränk oder Lebensmittel. Stimmt der Wert nicht überein, kann der Automat nur unter bestimmten Voraussetzungen in Betrieb genommen werden, da zu es dann um eine Reinigungskapsel handeln könnte.

Die fluoreszierende und/oder phosphoreszierende Substanz wird mit einer bestimmten elektromagnetischen Strahlung angestrahlt und während und/oder nachdem die Strahlung ausgeschaltet worden ist, wird die Fluoreszenz und/oder Phosphoreszenz gemessen. Die Strahlung kann mit einer Wellenlänge oder mehreren Wellenlängen erfolgen. Die Strahlung kann eine oder mehrere Quellen, die gleichzeitig oder nacheinander zum Einsatz kommen, umfassen.

Es können ein oder mehrere Sensoren die von der fluoreszierende und/oder phosphoreszierende Substanz emittierte Strahlung analysieren. Der Sensor ist vorzugsweise in dem Automaten, beispielsweise dessen Brühkammer oder im Bereich des Einwurfschachtes vorgesehen.

Des weiteren kann die Membran noch einen Dekordruck aufweisen. Dieser Dekordruck kann, bezogen auf die Sichtseite der Portionskapsel vor der Substanz der Kennung vorgesehen sein.

In einer bevorzugten Ausführungsform wird die Kennung durch ein Pigment, beispielsweise ein Farbpigment und/oder Floreszenzpigment und/oder Phosphoreszenzpigment erzielt, das auf dem Film vorgesehen ist.

Vorzugsweise ist die Kennung eine Substanz, die beispielsweise durch einen Energieeintrag aktiviert oder verändert werden kann.

Mit der erfindungsgemäßen Portionskapsel ist es möglich, zu verhindern, dass mit einer Reinigungskapsel versehentlich ein Getränk hergestellt wird. Weiterhin ist es anhand der Kennung möglich, dass der Automat erkennt, welche Art von Kapsel sich in seiner Brühkammer befindet und den Getränke- oder Lebensmittelherstellungsprozess, d. h. beispielsweise die Menge an Wasser, deren Druck und/oder deren Temperatur, entsprechend einstellt.

Gemäß einer bevorzugten Ausführungsform ist im Bodenbereich durch Materialabtrag, beispielsweise mittels eines Lasers, eine Schwächung vorgesehen. Diese Schwächung ist insbesondere in dem Bereich des Bodens der Kapsel vorgesehen, der für die Herstellung des Getränkes von einem Dorn durchstochen wird. Dadurch dass die Folie im Bereich des Dorns, beispielsweise durch Materialabtrag mittels eines Lasers, geschwächt ist, ist der Kraftaufwand, der zum Durchstoßen der Folie benötigt wird, geringer. Der Dorn eines entsprechenden Kaffeeautomaten kann eine Kraftbegrenzung, beispielsweise in Form einer Feder, aufweisen, die die Kraft begrenzt, mit der der Dorn gegen den Portionskapselboden drücken kann. Dadurch wird vermieden, dass Kapseln, die eine entsprechende Schwächung nicht aufweisen, in einem entsprechenden Kaffeeautomaten zum Einsatz kommen können.

Gemäß einer bevorzugten Ausführungsform weist die Portionskapsel einen Randbereich auf, der vorzugsweise an dem Basiselement vorgesehen ist. Vorzugsweise ist der Rand an dem dem Boden gegenüberliegenden Bereich des Basiselementes vorgesehen. An diesem Randbereich kann beispielsweise eine Membran zum Verschließen des Basiselementes angeordnet werden, nachdem das Rohmaterial in die Portionskapsel eingefüllt ist. Der Rand kann aber auch dazu dienen, die Kapsel in einem Einwurfschacht so zu führen, dass sie in einer ganz bestimmten Lage in eine Brühkammer fällt oder Brühkammer in einer ganz bestimmten Lage zugeführt wird. Gleichzeitig kann der Rand als Anschlags- und/oder Dichtungsfläche dienen. Eine weitere bevorzugte Ausführungsform ist eine Portionskapsel zur Herstellung eines Getränks, aufweisend ein im Wesentlichen kegelstumpfförmiges oder zylindrisches Basiselement, welches einen Hohlraum zur Aufnahme eines Getränkerohmaterials aufweist, und eine den Hohlraum verschließende Membran, wobei das Basiselement einen Wandungsbereich aufweist und das Basiselement ferner auf der der Membran abgewandten Seite der Portionskapsel einen Bodenbereich aufweist, wobei der Wandungsbereich eine Mehrzahl von Rillen aufweist und die Rillen zwischen der Membran und dem Bodenbereich über wenigstens einen Teil der Höhenerstreckung des Wandungsbereichs verlaufend vorgesehen sind und insbesondere parallel zueinander und parallel zu dem Bodenbereich vorgesehen sind. Diese Rillen verbessern vorzugsweise den Verbund zwischen der Portionskapsel und dem Film, der die Kennung aufweist.

Diese Portionskapsel hat gegenüber der Portionskapsel gemäß dem Stand der Technik beispielsweise den Vorteil, dass der Wandungsbereich des Basiselements durch die Mehrzahl von Rillen versteift ist. Dies hat zum einen den Vorteil, dass die Portionskapsel eine höhere mechanische Stabilität aufweist und somit eine Deformation und insbesondere ein seitliches Einknicken der Portionskapsel verhindert wird. Ein weiterer Vorteil der erfindungsgemäßen Portionskapsel ist, dass sich durch die Anordnung von Rillen im Wandungsbereich des Basiselements ein verbessertes Verhalten beim Durchströmen der Portionskapsel mit der Extraktionsflüssigkeit in der Brühkammer ergibt, weil es durch die Anordnung der Rillen, insbesondere durch ihren Verlauf zwischen der Membran und dem Bodenbereich über wenigstens einen Teil der Höhenerstreckung des Wandungsbereichs, möglich ist, die Qualität und die Zuverlässigkeit des Extraktionsvorgangs erheblich zu steigern. Insbesondere ist es erfindungsgemäß vorteilhaft möglich, dass durch die Erhöhung der mechanischen Stabilität durch die Verwendung der Mehrzahl von Rillen die Materialstärke des Basiselements insgesamt reduziert werden kann. Die Produktion der Portionskapsel wird somit erheblich kostengünstiger und umweltfreundlicher. Andererseits wird in der Brühkammer durch die Mehrzahl der Rillen eine Anhaftung des Wandungsbereichs an die Brühkammerwandung reduziert bzw. vermieden, wodurch das Auswerfen oder Entnehmen der Portionskapsel aus der Brühkammer begünstigt wird. Ein weiterer Vorteil der Mehrzahl von Rillen ist, dass innerhalb des Hohlraums die Strömung der Extraktionsflüssigkeit entlang des Basisbereichs durch die Rillenstruktur im Wandungsbereich optimiert gestaltet werden kann, so dass sich durch Formgebung der Rillenstruktur beispielsweise eine bessere bzw. stärkere Verwirbelung der Extraktionsflüssigkeit im Hohlraum oder aber eine gleichmäßigere (laminare) Strömung der Extraktionsflüssigkeit ergibt bzw. mit einfachen Mitteln realisiert werden kann. Eine im Vergleich zum Stand der Technik stärkere Verwirbelung der Extraktionsflüssigkeit im Hohlraum hat gegenüber dem Stand der Technik den Vorteil, dass sich keine ungewollten und zufälligen Hauptflüssigkeitsströme durch das Bett des Getränkerohmaterials bilden, sondern stattdessen das Getränkerohmaterial in seinem gesamten Volumen durchströmt wird. Der Extraktionsvorgang wird somit wesentlich effizienter und ist präziser zu steuern bzw. reproduzierbarer.

Das Getränkerohmaterial umfasst insbesondere Kaffeepulver (vorzugsweise gemahlenen Röstkaffee), Schokoladenpulver, Milchpulver, Tee oder dergleichen. Alternativ ist denkbar, dass das Getränkerohmaterial ein Getränkeextrakt, wie beispielsweise Instant-Kaffee, umfasst.

Vorzugsweise weist das Basiselement einen Absatz auf, der sich besonders bevorzugt an einen Flansch anschließt, wobei das Basiselement im Bereich des Absatzes einen größeren Durchmesser aufweist als im Wandungsbereich zwischen dem Absatz und dem Bodenbereich. Hierdurch ergibt sich in vorteilhafter Weise eine besonders einfache und robuste Möglichkeit, eine Stapelbarkeit der Portionskapseln bzw. eine Stapelbarkeit des Basiselements der Portionskapseln herbeizuführen.

Ferner ist es bevorzugt vorgesehen, dass innerhalb des Hohlraums ein Filterelement angeordnet ist, welches den Hohlraum in einen ersten Bereich zur Ordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial und/oder ein Filzmaterial umfasst.
Ein weiterer Gegenstand der vorliegenden Erfindung ist die Verwendung einer erfindungsgemäßen Portionskapsel zur Herstellung eines Heißgetränks.

Sowohl die Kennung als auch der Film sind vorzugsweise aus einem Material hergestellt, das eine lebensmittelrechtliche Zulassung hat, d.h. mit Lebensmitteln in Kontakt kommen darf.

Vorzugsweise weist die Portionskapsel einen Randbereich und/oder Flansch auf, der an dem Basiselement vorgesehen ist.

Gemäß einer weiteren Ausführungsform ist es vorgesehen, dass innerhalb des Hohlraums ein Filterelement angeordnet ist, welches den Hohlraum in einen ersten Bereich zur Anordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial und/oder ein Filzmaterial umfasst. Vorzugsweise ist dieses Material mit dem Boden, der Wandung und/oder dem Rand verbunden, insbesondere durch Siegeln oder Kleben verbunden.

Vorzugsweise wird der Film an die Membran gesiegelt oder geklebt.

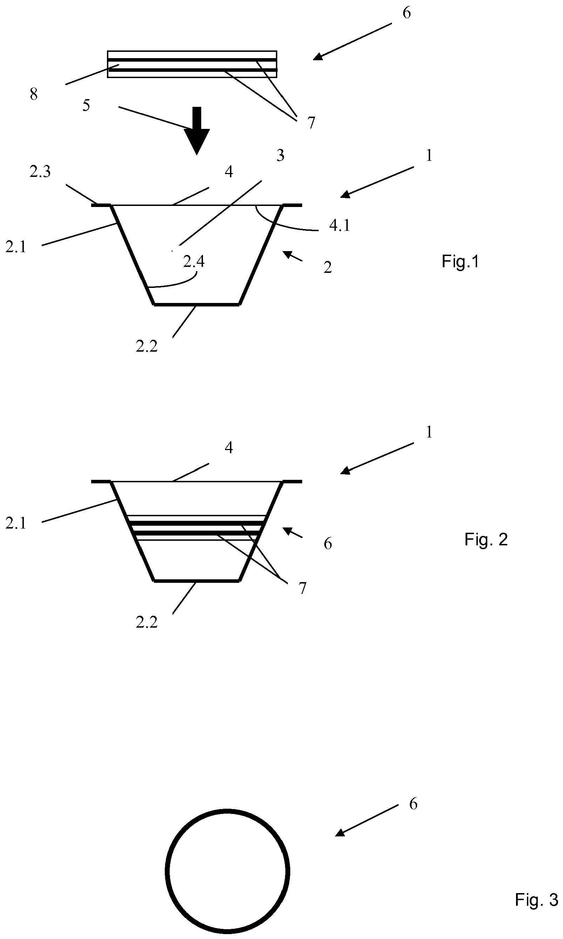

Alternativ oder zusätzlich erfolgt das Anbringen der Kennung an dem Film durch Energieeintrag, insbesondere mit einem Laser. Dadurch können die Optische Eigenschaften der Folie verändert werden. Vorzugsweise wird die Membran für das Vorsehen der Kennung gedreht. Die Figuren 1-5 stellen die Erfindung nicht dar. Sie dienen nur zur Erläuterung des Stands der Technik.
**Figuren 1 und 2** zeigt eine Portionskapsel mit einer Kennung auf einer Folie.
**Figur 3** zeigt die Folie als Schlauch.
**Figur 4** zeigt einen Folienring, dessen Enden verbunden wurden.
**Figur 5** zeigt ein Verfahren zum Aufbringen der Kennung.

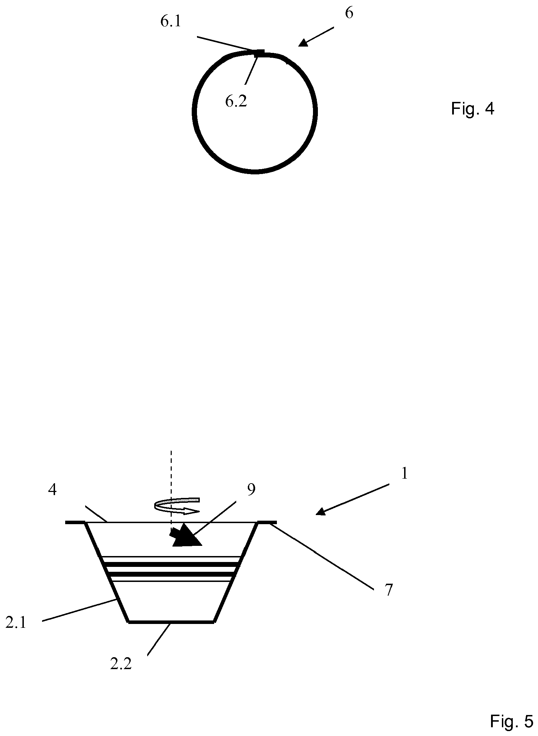

**Figuren 1 und** 2 zeigen eine Portionskapsel 1, die ein Basiselement 2 mit einer Wandung 2.1 und einem Bodenbereich 2.2 aufweist. Die Wandung 2.1 und der Boden 2.2 definieren einen Hohlraum 3, in dem ein Getränkerohmaterial und ggf. ein Einbauelement vorgesehen werden können. Dieser Hohlraum wird nach dessen Befüllung vorzugsweise von einer Membran verschlossen, die vorzugsweise mit dem Randbereich 2.3 des Basiselements beispielsweise durch Siegeln oder Kleben verbunden wird. Diese Kaffeeportionskapsel wird in eine Brühkammer eingeführt, in der sie von einer Flüssigkeit, beispielsweise Wasser, durchströmt wird. Dabei wird das Getränkerohmaterial extrahiert oder aufgelöst und dadurch das gewünschte Getränk erzeugt. Erfindungsgemäß weist diese Portionskapsel nun eine Kennung 7 auf, mit der feststellbar ist, ob die jeweilige Portionskapsel für die Herstellung eines Getränks oder Lebensmittels geeignet ist. Ist dies nicht der Fall, können sich signifikante Gesundheitsprobleme ergeben. Beispielsweise kann durch den Einsatz einer Reinigungskapsel ein für den Benutzer ungenießbare wässrige Lösung hergestellt werden. Die gilt es zu vermeiden. Diese Kennung 7 ist einem Film 6, insbesondere einer Kunststofffolie vorgesehen, der, nachdem die Portionskapsel geformt worden ist, wie durch den Pfeil 5 dargestellt, in das Basiselement eingeführt und mit der Innenseite 2.4 des Basiselements 2 der Portionskapsel verbunden wird. In dem vorliegenden Fall ist die Kennung 7 mindestens einen vorzugsweise zwei Streifen, die sich in ihrer elektrischen Leitfähigkeit und/oder in ihren magnetischen Eigenschaften von dem Material des Films und/oder von dem Material des Basiselementes der Portionskapsel unterscheiden. Beispielsweise hat die Kennung eine andere Leitfähigkeit oder andere magnetische Eigenschaften als mindestens eines der beiden Materialien und/oder der Bereich 8 zwischen zwei Kennungen 7. Vorzugsweise erstreckt sich der Film 6 um den gesamten Umfang des Basiselementes. Besonders bevorzugt erstreckt sich jede Kennung 7 um den gesamten äußeren Umfang des Films/Filmrings 6. Nachdem der Film im Hohlraum 3 des Basiselementes vorgesehen worden ist, wird er mit diesem verbunden. Die Kennung kann auf den Film appliziert oder eingebracht werden oder als Teil des Films, d.h. untrennbar mit diesem verbunden, vorgesehen sein. Der Fachmann erkennt, dass die in Figur 2 dargestellte Kennung auch durch einen Farbauftrag erfolgen kann, was anhand von Figur 5 beispielhaft beschrieben ist. Der Fachmann erkennt außerdem, dass die Kennung alternativ oder zusätzlich auch auf der Innenseite 4.1. der Membran 4 vorgesehen sein kann.

Den **Figuren 3** **und** **4** kann entnommen werden, dass der Film als Schlauch zur Verfügung gestellt werden kann, der auf die gewünschte Länge abgelängt wird (Figur 3). Die Kennung wird beispielsweise auf den Film aufgetragen oder der Film wird aus zwei Materialien hergestellt, wobei eines die Kennung, beispielsweise eine andere elektrische Leitfähigkeit als der Rest aufweist. Alternativ werden die Enden 6.1, 6.2 des Films nach dessen Herstellung miteinander verbunden. Dies kann erfolgen bevor der Film an dem Basiselement angebracht wird, beim Anbringen oder nach dem Anbringen. Die Enden 6.1, 6.2 können aber auch auf Stoß oder mit einem Abstand zueinander vorsehen werden.

In **Figur 5** ist noch eine Ausführungsform der erfindungsgemäßen Portionskapsel in einer Seitenansicht dargestellt. In dem vorliegenden Fall ist die Kennung 7 auf der Innenseite des Basiselementes aufgetragen. Die Kennung ist kreisringförmig und wird in dem vorliegenden Fall durch eine Düse 9 aufgetragen, die sich beim Auftrag dreht. Alternativ oder zusätzlich kann sich auch die Portionskapsel beim Auftrag der Kennung drehen.

### Bezugszeichenliste:

- 1: Portionskapsel
- 2: Basiselement
- 2.1: Wandung
- 2.2: Bodenbereich
- 2.3: Randbereich, Flansch
- 2.4: Innenseite Basiselement
- 3: Hohlraum
- 4: Membran
- 4.1: Innenseite der Membran
- 5: Relativbewegung
- 6: Ring, Filmring

- 6.1: Ende des Rings
- 6.2: Ende des Rings

- 7: Kennung, Farbkranz, Barcode
- 8: Bereich neben einer Kennung
- 9: Düse

## Patentansprüche

1. Portionskapsel (1) zur Herstellung eines Getränks mit einem Basiselement (2), das einen Hohlraum (3) aufweist, in dem ein Getränkerohmaterial vorgesehen ist und der von einer Membran (4) verschlossen wird, die an dem Basiselement befestigt ist, wobei sie eine Kennung (7) aufweist, die es ermöglicht die jeweilige Portionskapsel zu individualisieren, wobei die Kennung (7) auf der Innenseite (4.1) der Membran vorgesehen ist, wobei es sich bei der Kennung um Flächenbereiche mit einer bestimmten optischen Reflexionseigenschaft handelt, **dadurch gekennzeichnet, dass** die Kennung auf einem Film (6) vorgesehen ist, der mit der Membran verbunden ist.

2. Portionskapsel (1) nach Anspruch 1, **dadurch gekennzeichnet, dass** sie einen Randbereich und/oder Flansch (2.3) aufweist, der an dem Basiselement (2) vorgesehen ist.

3. Portionskapsel (1) nach Anspruch 1 oder 2, **dadurch gekennzeichnet, dass** innerhalb des Hohlraums ein Filterelement angeordnet ist, welches den Hohlraum in einem ersten Bereich zur Anordnung des Getränkerohmaterial und in einem zweiten Bereich zur Aufnahme eines Getränkeextrakts unterteilt, wobei das Filterelement (5) ein nicht gewebtes Material, insbesondere ein Filz- oder Vliesmaterial umfasst.

4. Verwendung einer Portionskapsel (1) nach einem der vorhergehenden Ansprüche zur Herstellung eines Heißgetränks.

## Claims

1. Portion capsule (1) for making a beverage, having a basic element (2) with a cavity (3), in which a raw beverage material is provided and which is closed by a membrane (4), which is fastened on the basic element, wherein it has an identifier (7), which makes it possible to individualize the respective portion capsule, wherein the identifier (7) is provided on the inside (4.1) of the membrane, wherein the identifier is surface-area regions with a specific optical reflection property, **characterized in that** the identifier is provided on a film (6) which is connected to the membrane.

2. Portion capsule (1) according to Claim 1, **characterized in that** it has a peripheral region and/or flange (2.3), which is provided on the basic element (2).

3. Portion capsule (1) according to Claim 1 or 2, **characterized in that** the cavity contains a filter element, which subdivides the cavity into a first region for arranging the raw beverage material and into a second region for accommodating a beverage extract, wherein the filter element (5) comprises a material that is not woven, in particular a felt material or nonwoven material.

4. Use of a portion capsule (1) according to one of the preceding claims for making a hot beverage.

## Revendications

1. Dose en capsule (1) pour la préparation d'une boisson avec un élément de base (2) présentant une cavité (3) dans laquelle est prévue une matière de base pour une boisson, et qui est fermée par une membrane (4) qui est fixée à l'élément de base, ladite dose en capsule présentant un marquage (7) qui permet d'identifier individuellement la dose en capsule respective, le marquage (7) étant prévu sur le côté intérieur (4.1) de la membrane, le marquage étant formé par des régions de la surface ayant une propriété de réflexion optique particulière, **caractérisée en ce que** le marquage est prévu sur un film (6) qui est connecté à la membrane.

2. Dose en capsule (1) selon la revendication 1, **caractérisée en ce qu'**elle présente une région de bord et/ou une bride (2.3) qui est prévue sur l'élément de base (2).

3. Dose en capsule (1) selon la revendication 1 ou 2, **caractérisée en ce qu'**à l'intérieur de la cavité est disposé un élément de filtre qui divise la cavité en une première région pour disposer la matière de base pour une boisson et une deuxième région pour recevoir un extrait de boisson, l'élément de filtre (5) comprenant un matériau non tissé, en particulier un matériau en feutre ou un matériau en nappe.

4. Utilisation d'une dose en capsule (1) selon l'une quelconque des revendications précédentes pour la préparation d'une boisson chaude.
